# EUROPEAN PATENT SPECIFICATION

(11) **EP 3 974 570 B1**
(45) Date of publication and mention of the grant of the patent: **25.06.2025**
(21) Application number: 19901401.0
(22) Date of filing: 20.09.2019
(51) Int. Cl.: D04H 1/728, D06H 7/00, D06C 3/00, D01F 6/74, D01D 5/00, D01F 6/60, D01D 10/02, C08G 73/10, D04H 1/4326

(54) **ULTRA-SHORT ELECTROSPUN POLYIMIDE NANOFIBER AND METHOD FOR PREPARING THE SAME**
ULTRAKURZE ELEKTROGESPONNENE POLYIMID-NANOFASER UND VERFAHREN ZU IHRER HERSTELLUNG
NANOFIBRE DE POLYIMIDE ULTRA-COURTE PAR ÉLECTROFILAGE ET SON PROCÉDÉ DE PRÉPARATION

(30) Priority: 21.05.2019 CN 201910426410
(43) Date of publication of application: 30.03.2022
(73) Proprietor: JIANGXI ADVANCED NANOFIBER S&T CO., LTD, High-Tech District Nanchang Jiangxi 330096 (CN)
(72) Inventor: HOU, HaoQing, Nanchag, Jiangxi 330096 (CN); OUYANG, Wen, Nanchag, Jiangxi 330096 (CN); CHENG, ChuYun, Nanchag, Jiangxi 330096 (CN); WANG, Qi, Nanchag, Jiangxi 330096 (CN); LV, XiaoYi, Nanchag, Jiangxi 330096 (CN)
(74) Representative: Kuhnen & Wacker Patent- und Rechtsanwaltsbüro PartG mbB
(86) International application number: PCT/CN2019/106912
(87) International publication number: WO 2020/232929

(56) References cited:
- WO-A1-2014/010753
- CN-A- 102 168 317
- CN-A- 102 392 312
- CN-A- 102 493 015
- CN-A- 105 019 141
- CN-A- 107 675 288
- CN-A- 109 293 978
- CN-A- 110 106 635
- US-A1- 2012 228 797
- CHEN YU; HAN DONGHUA; OUYANG WEN; CHEN SHUILIANG; HOU HAOQING; ZHAO YONG; FONG HAO: "Fabrication and evaluation of polyamide 6 composites with electrospun polyimide nanofibers as skeletal framework", COMPOSITES: PART B, vol. 43, no. 5, 8 December 2011 (2011-12-08), pages 2382 - 2388, XP028918939, ISSN: 1359-8368, DOI: 10.1016/j.compositesb.2011.11.071

## Description

### Technical Field

The present invention relates to the technical field of ultrashort fibers, and more particularly, to an ultrashort electrospun polyimide nanofiber and a method for preparing the same.

### Background

Polyimide fiber is an organic fiber used at a relatively high temperature at present. It is superior over other high-performance fibers (such as aramid fiber and polyphenylene sulfide fiber) in terms of heat resistance, aging resistance, oxidation resistance, ultraviolet resistance, and water absorption. Therefore, polyimide fiber is widely used in environmental protection, aerospace, special and high temperature thermal insulation, civil textile and other fields. Ultrashort polyimide fiber not only has the excellent properties of polyimide fiber, but more importantly, it can be made into a slurry coating liquid, or used as a filler for modification of resin, rubber, etc., or as a special paper pulp material, which has greatly expanded the application field of polyimide fiber.

At present, electrospun polyimide nanofibers are all obtained by crushing a nonoriented electrospun polyimide nanofiber felt or porous membrane. As a result, their length uniformity is very poor, and the fibers differ greatly in length. The adhesion between the fibers constitutes a severer problem, making it difficult for the fibers to disperse in any dispersant or resin, which seriously affects the mechanical properties of the composite materials prepared from it, such as stress defects, stress concentration, internal micro-cracks or the like. On the other hand, the diameter of the current conventional polyimide short fiber is not small enough, generally above 10.0 µm, so that the surface area of the fiber is small. As a result, the fiber has a weak interface force with the matrix resin in the composite material, and thus provides no significant effect of strengthening and toughening. Therefore, in the field of composite materials, it is necessary to provide a method for preparing an ultrashort polyimide nanofiber with a small diameter, uniform length, and good dispersion properties.

### Summary

In order to solve the above technical problems, a first aspect of the present invention provides a method for preparing an ultrashort electrospun polyimide nanofiber, comprising:
(1) preparation of a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber;
wherein, the polyamide acid fiber felt is cut into strips with a width of 3 - 8 cm; and the ultra-short polyimide nanofiber formed by cutting is 0.1 - 2.00 mm long.

According to the present invention, the process of forming the polyimide fiber by hot stretching has a stretching temperature of 160-420°C.

According to the present invention, the process of forming the polyimide fiber by hot stretching is divided into three stretching stages, a stretching temperature of the first stage is 160 - 220°C, a stretching temperature of the second stage is 280 - 320°C, and a stretching temperature of the third stage is 380-420°C.

According to the present invention, a draft ratio of the first stage is 3 - 5, a draft ratio of the second stage is 3 - 5, and a draft ratio of the third stage is 1 - 2.

As a preferred technical solution of the present invention, the ultrashort polyimide nanofiber formed by cutting has a tensile strength of 1.0 - 8.0 GPa, and an elongation at break of 10 - 30%.

As a preferred technical solution of the present invention, a raw material for preparing the polyamide acid solution comprises a tetracarboxylic dianhydride monomer, a diamine monomer and a polar solvent.

As a preferred technical solution of the present invention, the tetracarboxylic dianhydride monomer is 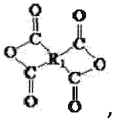 where R₁ is any one or more of the following groups:

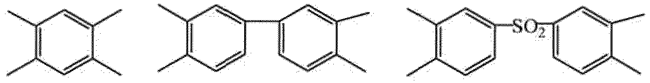

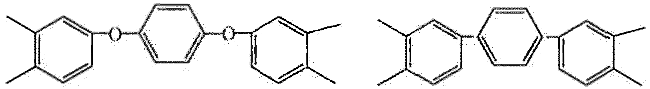

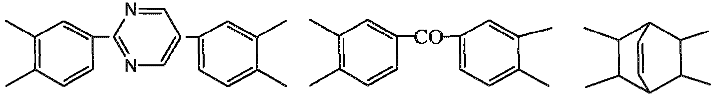

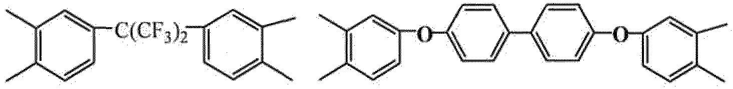

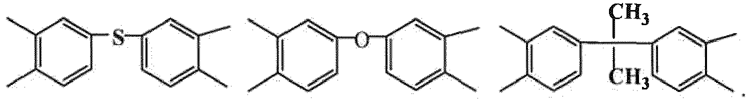

As a preferred technical solution of the present invention, the diamine monomer is H₂N-R₂-NH₂, where R₂ is any one or more of the following groups 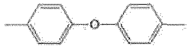 diphenyl ether diamine residue, 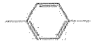 p-phenylenediamine residue, 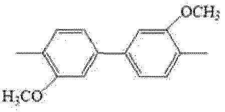 dimethoxybiphenyldiamine residue, 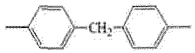 diphenylmethanediamine residue, 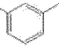 m-phenylenediamine residue, 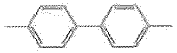 diphenyldiamine residue, diphenoxydiphenylsulfone diamine residue, 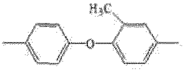 2-methyldiphenyl ether diamine residue, 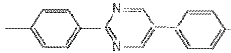 2,6-pyrimidine diphenyl diamine residue, and 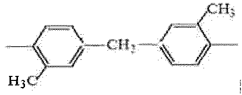 (3,3'-dimethyl)diphenylmethane diamine residue.

A second aspect of the present invention provides an ultrashort electrospun polyimide nanofiber prepared according to the method for preparing an ultrashort electrospun polyimide nanofiber.

A third aspect of the present invention provides a use of the ultrashort electrospun polyimide nanofiber in preparing a carbon fiber composite material and a flexible honeycomb material.

Compared with the prior art, the present invention has the following beneficial effects: the ultra-short polyimide fiber obtained by the preparation process provided by the present invention has a high degree of orientation, with its diameter between 100-1000 nm. Moreover, the ultra-short fiber has uniform length, good dispersion in organic solvents, and is free of adhesion or agglomeration. It can be potentially applied in the preparation of carbon fiber composite materials and flexible honeycomb materials.

### Detailed Description of the Embodiments

In order to solve the above technical problems, the present invention provides a method for preparing an ultrashort electrospun polyimide nanofiber, comprising:
(1) preparation of a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber.

In an embodiment, the raw materials for preparation of the polyamide acid solution include a tetracarboxylic dianhydride monomer, a diamine monomer, and a polar solvent.

In an embodiment, the tetracarboxylic dianhydride monomer is 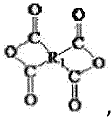 where R₁ is any one or more of the following groups: 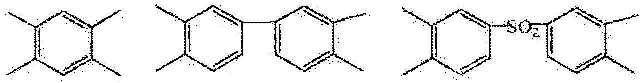 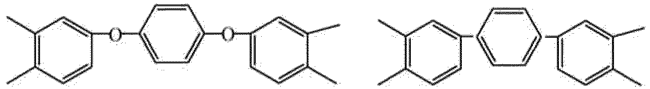 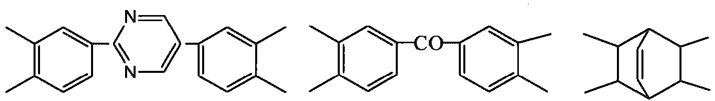 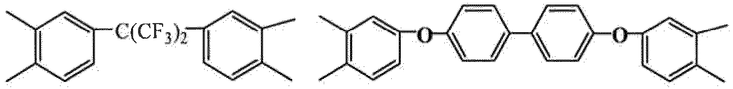 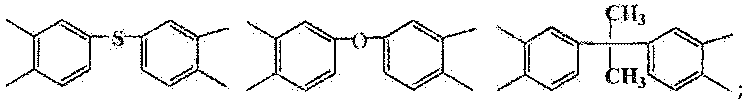 and preferably,

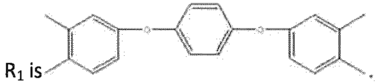

In an embodiment, the diamine monomer is H₂N-R₂-NH₂, where R₂ is any one or more of the following groups: 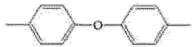 diphenyl ether diamine residue, 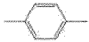 p-phenylenediamine residue, 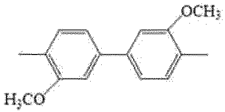 dimethoxybiphenyldiamine residue, 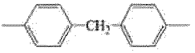 diphenylmethanediamine residue, 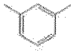 m-phenylenediamine residue, 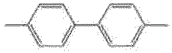 diphenyldiamine residue, diphenoxydiphenylsulfone diamine residue, 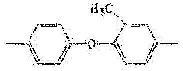 2-methyldiphenyl ether diamine residue, 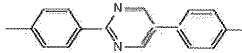 2,6-pyrimidine diphenyl diamine residue, and 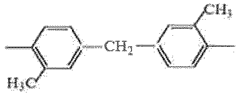 (3,3'-dimethyl)diphenylmethane diamine residue; and preferably, R₂ is

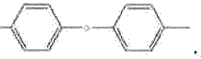

In an embodiment, the polar solvent is selected from any one or more of N,N-dimethylformamide, N-methylpyrrolidone, dimethylsulfoxide, and N,N-dimethylacetamide; and preferably, the polar solvent is N,N-dimethylacetamide.

In an embodiment, the molar ratio of the tetracarboxylic dianhydride monomer to the diamine monomer is (0.8-1.2):1; and preferably, the molar ratio of the tetracarboxylic dianhydride monomer to the diamine monomer is 1: 1.

In an embodiment, the weight ratio of the tetracarboxylic dianhydride monomer and the diamine monomer in total to the polar solvent is (10-25):100; and preferably, the weight ratio of the tetracarboxylic dianhydride monomer and the diamine monomer in total to the polar solvent is 22:100.

In an embodiment, the polyamide acid solution is prepared by a method comprising: placing the tetracarboxylic dianhydride monomer, the diamine monomer and the polar solvent in a reactor to react at 0-30°C for 1-10 hours, and then diluting the reaction solution with N,N-dimethylacetamide to an absolute viscosity of 1.5-5.5 Pa.S to obtain a polyamide acid solution.

Preferably, the preparation method of the polyamide acid solution comprises: placing the tetracarboxylic dianhydride monomer, the diamine monomer and the polar solvent in a reactor to react at 15°C for 5.5 hours, and then diluting the reaction solution with N, N-dimethylacetamide to 3.5 Pa.S to obtain a polyamide acid solution.

In the present invention, the absolute viscosity is measured using a digital display viscometer SNB-1.

In an embodiment, the process of forming the polyamide acid fiber felt by electrospinning is as follows: the polyamide acid solution is placed in a injection pump, ejected from a spinneret, and gathers on a stainless steel net belt collector under the action of a high-voltage electrostatic field; wherein, the distance from the spinneret to the stainless steel net belt collector is 8-50 cm, the electric field strength of the high voltage electrostatic field is 100-650 kV/m, and the travel speed of the stainless steel net belt is 0.2-5 m/min. Preferably, the distance from the spinneret to the stainless steel net belt collector is 25 cm, the electric field strength of the high voltage electrostatic field is 400 kV/m, and the travel speed of the stainless steel net belt is 3 m/min.

In an embodiment, the polyamide acid fiber felt is cut into strips with a width of 3-8 cm; preferably, the polyamide acid fiber felt is cut into strips with a width of 5-7 cm; and more preferably, the polyamide acid fiber felt is cut into strips with a width of 6 cm.

First of all, polyamide acid is more flexible, more stretchable, and easier to stretch, and has a higher draft ratio, which is conducive to the high orientation of the fiber filaments in the fiber bundle and the axial orientation of the polymer molecules in the fiber to reinforce fibers. In contrast, it is more difficult to stretch imidized fibers, there is some adhesion between the fibers during high temperature imidization, and as a result, a cross-network structure is formed. The fiber cloth with this kind of network structure is difficult to undergo high-fold stretching. Without high-fold stretching, there will be no high degree of orientation. As a result, the fiber filaments cannot be arranged in parallel, and ultra-short fibers with uniform lengths cannot be formed. Therefore, the process of electrospinning followed by hot stretching is adopted.

When the polyamide acid nanofiber felt is cut into strips with a width of 5-7cm, the resulting ultra-short fibers have a high degree of orientation and can be continuously produced. If the width is too small, the fibers are easily orientated due to high freedom of movement of the molecular chain, but they are easy to break because of high degree of orientation, and it is difficult to realize continuous production. When the width is greater than 7 cm, the draft ratio is limited, the degree of orientation is low, and the resulting fiber has a low mechanical strength.

The stretching temperature during the process of forming the polyimide fiber by hot stretching is 160-420°C.

The process of forming the polyimide fiber by hot stretching is divided into three stages of stretching, the stretching temperature of the first stage is 160-220°C, the stretching temperature of the second stage is 280-320°C, and the stretching temperature of the third stage is 380-420°C.

The process of forming the polyimide fiber by hot stretching is divided into three stages of stretching, the draft ratio of the first stage is 3-5, the draft ratio of the second stage is 3-5, and the draft ratio of the third stage is 1-2,

In an embodiment, the process of forming polyimide fibers by hot stretching is divided into three stages of stretching, the unwinding speed of the first stretching stage is 5-10 m/min, the unwinding speed of the second stretching stage is 3 -8 m/min, and the unwinding speed of the third stretching stage is 1-5 m/min; preferably, the unwinding speed of the first stretching stage is 8 m/min, the unwinding speed of the second stretching stage is 6 m/min, and the unwinding speed of the third stretching stage is 3 m/min.

Through experiments, it has been found that when the hot stretching process is divided into three stages of heating and stretching, it is easier to continuously produce ultra-short nanofibers with small diameter, uniform length, high degree of orientation, and good dispersibility. This may be due to the fact that initially the fibers are mostly polyamide acid with a flexible molecular chain, and there is low adhesion between the molecules. The fibers can be stretched and oriented at a relatively low temperature. The molecules are arranged in parallel, the structure is regular, and the interaction between the fiber surfaces is further reduced. After low temperature stretching, part of the polyamide acid in the system is converted to polyimide, the flexibility of the molecular chain is reduced, and the force between the molecules is increased. A second stage of stretching at a higher temperature is required for further imidization to improve molecular orientation and reduce the force and bonding strength between molecules. With the increase of structural regularity and the reduction of molecular flexibility, the third stage of stretching at high temperature further promotes the movement of non-imidized molecules that are not parallelly arranged in the system, forming fibers that are uniformly arranged and highly oriented to facilitate cutting of short fibers having uniform length.

In an embodiment, the unwinding speed in the process of cutting the ultra-short polyimide nanofiber is 0.5 - 5 m/min; preferably, the unwinding speed is 1 - 3 m/min; and more preferably, the unwinding speed is 2 m/min.

In an embodiment, the resultant ultrashort polyimide nanofibers are cut mechanically using an electronically controlled steel knife or cut by burning using a laser beam; preferably, they are cut mechanically using an electrically controlled steel knife.

In an embodiment, the length of the ultra-short polyimide nanofibers formed by cutting is 0.1 - 2.00 mm; preferably, the length of the ultra-short polyimide nanofibers formed by cutting is 0.5 - 1.50 mm; and more preferably, the length of the ultra-short polyimide nanofibers formed by cutting is 1.00 - 1.20 mm.

In an embodiment, the ultra-short polyimide nanofibers formed by cutting have a tensile strength of 1.0 - 8.0 GPa, and an elongation at break of 10 - 30%.

A second aspect of the present invention provides an ultrashort electrospun polyimide nanofiber prepared by the method for preparing an ultrashort electrospun polyimide nanofiber.

A third aspect of the present invention provides a use of the ultrashort electrospun polyimide nanofiber in preparing carbon fiber composite materials and flexible honeycomb materials.

### Example 1

Example 1 of the present invention provides an ultrashort electrospun polyimide nanofiber, which is prepared as follows:
(1) preparation of a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber;

In the preparation process of the polyamide acid solution, the preparation materials include a tetracarboxylic dianhydride monomer, a diamine monomer and a polar solvent. The molar ratio of the tetracarboxylic dianhydride monomer to the diamine monomer is 1:1; the weight ratio of the tetracarboxylic dianhydride monomer and the diamine monomer in total to the polar solvent is 22 : 100;

The tetracarboxylic dianhydride monomer of is 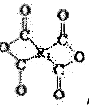 where R₁ is

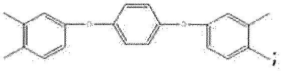

The diamine monomer is H₂N-R₂-NH₂, where R₂ is

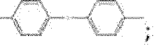

The polar solvent is N, N-dimethylacetamide;

The preparation method of the polyamide acid solution comprises: placing the tetracarboxylic dianhydride monomer, the diamine monomer and the solvent in a reactor to react at 15°C for 5.5 hours, and then diluting the reaction solution with N, N-dimethylacetamide to 3.5 Pa.S to obtain a polyamide acid solution;

The process of forming the polyamide acid fiber felt by electrospinning is as follows: the polyamide acid solution is placed in a injection pump, ejected from a spinneret, and gathers on a stainless steel net belt collector under the action of a high-voltage electrostatic field; wherein, the distance from the spinneret to the stainless steel net belt collector is 25 cm, the electric field strength of the high voltage electrostatic field is 400 kV/m, and the travel speed of the stainless steel net belt is 3 m/min;

The polyamide acid fiber felt is cut into strips with a width of 6 cm;

The process of forming the polyimide fiber by hot stretching is divided into three stages of stretching, the stretching temperature of the first stage is 190°C, the stretching temperature of the second stage is 300°C, and the stretching temperature of the third stage is 400°C; the draft ratio of the first stage is 4, the draft ratio of the second stage is 3, and the draft ratio of the third stage is 1.5; the unwinding speed of the first stretching stage is 8 m/min, the unwinding speed of the second stretching stage is 6 m/min, and the unwinding speed of the third stretching stage is 3 m/min;

The unwinding speed in the process of cutting the ultra-short polyimide nanofiber is 2 m/min; the length of the ultra-short polyimide nanofiber formed by cutting is 0.1-2.00 mm.

### Example 2

Example 2 of the present invention provides an ultrashort electrospun polyimide nanofiber, which is prepared as follows:
(1) preparation of a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber;

In the preparation process of the polyamide acid solution, the preparation materials include a tetracarboxylic dianhydride monomer, a diamine monomer and a polar solvent. The molar ratio of the tetracarboxylic dianhydride monomer to the diamine monomer is 1.2:1; the weight ratio of the tetracarboxylic dianhydride monomer and the diamine monomer in total to the polar solvent is 25:100;

The tetracarboxylic dianhydride monomer of is 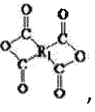 where R₁ is

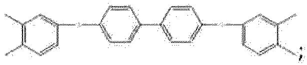

The diamine monomer is H₂N-R₂-NH₂, where R₂ is

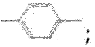

The polar solvent is N, N-dimethylacetamide;

The preparation method of the polyamide acid solution comprises: placing the tetracarboxylic dianhydride monomer, the diamine monomer and the solvent in a reactor to react at 15°C for 5.5 hours, and then diluting the reaction solution with N, N-dimethylacetamide to 5.5 Pa.S to obtain a polyamide acid solution;

The process of forming the polyamide acid fiber felt by electrospinning is as follows: the polyamide acid solution is placed in a injection pump, ejected from a spinneret, and gathers on a stainless steel net belt collector under the action of a high-voltage electrostatic field; wherein, the distance from the spinneret to the stainless steel net belt collector is 50 cm, the electric field strength of the high voltage electrostatic field is 650 kV/m, and the travel speed of the stainless steel net belt is 5 m/min;

The polyamide acid fiber felt is cut into strips with a width of 7 cm;

The process of forming the polyimide fiber by hot stretching is divided into three stages of stretching, the stretching temperature of the first stage is 220°C, the stretching temperature of the second stage is 320°C, and the stretching temperature of the third stage is 420°C; the draft ratio of the first stage is 5, the draft ratio of the second stage is 5, and the draft ratio of the third stage is 2; the unwinding speed of the first stretching stage is 8 m/min, the unwinding speed of the second stretching stage is 6 m/min, and the unwinding speed of the third stretching stage is 3 m/min;

The unwinding speed in the process of cutting the ultra-short polyimide nanofiber is 2 m/min; the length of the ultra-short polyimide nanofiber formed by cutting is 0.1-2.00 mm.

### Example 3

Example 3 of the present invention provides an ultrashort electrospun polyimide nanofiber, which is prepared as follows:
(1) preparation of a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber;

In the preparation process of the polyamide acid solution, the preparation materials include a tetracarboxylic dianhydride monomer, a diamine monomer and a polar solvent. The molar ratio of the tetracarboxylic dianhydride monomer to the diamine monomer is 0.8:1; the weight ratio of the tetracarboxylic dianhydride monomer and the diamine monomer in total to the polar solvent is 10:100;

The tetracarboxylic dianhydride monomer of is 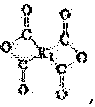 where R₁ is

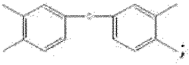

The diamine monomer is H₂N-R₂-NH₂, where R₂ is

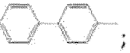

The polar solvent is N, N-dimethylacetamide;

The preparation method of the polyamide acid solution comprises: placing the tetracarboxylic dianhydride monomer, the diamine monomer and the solvent in a reactor to react at 15°C for 5.5 hours, and then diluting the reaction solution with N, N-dimethylacetamide to 1.5 Pa.S to obtain a polyamide acid solution;

The process of forming the polyamide acid fiber felt by electrospinning is as follows: the polyamide acid solution is placed in a injection pump, ejected from a spinneret, and gathers on a stainless steel net belt collector under the action of a high-voltage electrostatic field; wherein, the distance from the spinneret to the stainless steel net belt collector is 8 cm, the electric field strength of the high voltage electrostatic field is 100 kV/m, and the travel speed of the stainless steel net belt is 0.2 m/min;

The polyamide acid fiber felt is cut into strips with a width of 5 cm;

The process of forming the polyimide fiber by hot stretching is divided into three stages of stretching, the stretching temperature of the first stage is 160°C, the stretching temperature of the second stage is 280°C, and the stretching temperature of the third stage is 380°C; the draft ratio of the first stage is 3, the draft ratio of the second stage is 3, and the draft ratio of the third stage is 1; the unwinding speed of the first stretching stage is 8 m/min, the unwinding speed of the second stretching stage is 6 m/min, and the unwinding speed of the third stretching stage is 3 m/min;

The unwinding speed in the process of cutting the ultra-short polyimide nanofiber is 2 m/min; the length of the ultra-short polyimide nanofiber formed by cutting is 0.1-2.00 mm.

### Example 4

Example 4 of the present invention provides an ultra-short electrospun polyimide nanofiber, which is implemented the same as Example 1, except that the polyamide acid fiber felt is cut into strips with a width of 3 cm.

### Example 5

Example 5 of the present invention provides an ultra-short electrospun polyimide nanofiber, which is implemented the same as Example 1, except that the polyamide acid fiber felt is cut into strips with a width of 8 cm.

### Example 6

Example 6 of the present invention provides an ultra-short electrospun polyimide nanofiber, which is implemented the same as Example 1, except that the stretching temperature of the first stage is 250°C.

### Example 7

Example 7 of the present invention provides an ultra-short electrospun polyimide nanofiber, which is implemented the same as Example 1, except that the draft ratio of the first stage is 2.

### Example 8

Example 8 of the present invention provides an ultra-short electrospun polyimide nanofiber, which is implemented the same as Example 1, except that the stretching temperature of the second stage is 370°C.

### Example 9

Example 9 of the present invention provides an ultra-short electrospun polyimide nanofiber, which is implemented the same as Example 1, except that the draft ratio of the second stage is 2.

### Example 10

Example 10 of the present invention provides an ultra-short electrospun polyimide nanofiber, which is implemented the same as Example 1, except that the process of forming a polyimide fiber by hot stretching is divided into two stages of stretching, wherein the stretching temperature of the first stage is 190°C, the stretching temperature of the second stage is 400°C; the draft ratio of the first stage is 4, the draft ratio of the second stage is 1.5; the unwinding speed of the first stretching stage is 8 m/min, and the unwinding speed of the second stretching stage is 3 m/min.

### Example 11

Example 11 of the present invention provides an ultra-short electrospun polyimide nanofiber, which is implemented the same as Example 1, except that the stretching temperature of the third stage is 300°C.

### Example 12

Example 12 of the present invention provides an ultra-short electrospun polyimide nanofiber, which is implemented the same as Example 1, except that the draft ratio of the third stage is 3.

### Performance evaluation:

1. Orientation degree: This experiment uses the principle of sound velocity method to measure the orientation degree of the blended filaments; the sound velocity method measures the orientation degree by analyzing the relationship between the direction of sound wave propagation and the fiber axis. Because the arrangement (i.e. orientation) of molecular chains in the filament influences the propagation direction of the sound wave in the filament, the change of the sound wave is used to characterize the degree of orientation. When the sound wave propagates along the axis of the fiber, it indicates that the fiber has a good orientation degree;
Experimental instrument: MC68VZ328 digital fiber sound velocity orientation measuring instrument; for each test group, 5 samples are used, and the average value thereof is taken;
2. Fiber diameter: The diameter of the fiber is measured by SEM. For each example, five samples are used, the diameter is measured, and the average value thereof is taken;
3. The mechanical properties of the fiber: the tensile strength and the elongation at break of the fiber are measured using the Instron-12111 universal material testing machine of INSTRON (US); for each test group, 5 samples are used, and the average value thereof is taken; the measured tensile strength of the fibers obtained in Examples 1, 2, and 3 is 6.5 GPa, 6.1 GPa, and 5.8 GPa, respectively;
4. Uniformity of fiber length: 100 ultra-short fiber monofilaments obtained are randomly selected from each group of samples to determine the proportion of fibers with a length in the range of 0.1 to 2.00 mm;
5. Fiber dispersibility: The fibers obtained in Examples 1-12 are dispersed into N,N-dimethylacetamide at room temperature, and observed for fiber adhesion.

| | Orientat ion degree (%) | Fiber diameter (nm) | Elongation at break (%) | Length uniformity (%) | Dispersity |
|---|---|---|---|---|---|
| Example 1 | 95 | 300 | 22 | 100 | No adhesion |
| Example 2 | 92 | 315 | 23 | 98 | No adhesion |
| Example 3 | 87 | 322 | 26 | 96 | No adhesion |
| Example 4 | 85 | 285 | 31 | 62 | No adhesion |
| Example 5 | 75 | 550 | 23 | 82 | Adhesion |
| Example 6 | 80 | 460 | 22 | 66 | Adhesion |
| Example 7 | 86 | 385 | 35 | 80 | No adhesion |
| Example 8 | 82 | 410 | 24 | 85 | Adhesion |
| Example 9 | 82 | 346 | 33 | 76 | No adhesion |
| Example 10 | 77 | 440 | 26 | 72 | Adhesion |
| Example 11 | 84 | 380 | 24 | 85 | No adhesion |
| Example 12 | 88 | 315 | 31 | 55 | No adhesion |

It can be seen from the test results in Table 1 that the ultrashort polyimide fiber obtained by the preparation process provided by the present invention has a high degree of orientation with a short diameter. Also, the length of the ultrashort fiber is uniform, its dispersion in organic solvents is good, and there is no adhesion or agglomeration. Thus, it has potential applications in the preparation of carbon fiber composite materials and flexible honeycomb materials.

It should be pointed out that what described above are only preferred embodiments of the present invention, and the scope of protection of the present invention is not limited thereto. Any changes or alternations that are readily conceived by those skilled in the art should be within the protection scope of the present invention.

## Claims

1. A method for preparing an ultrashort electrospun polyimide nanofiber, **characterized in that** the method comprises:
(1) preparing a polyamide acid solution;
(2) forming a polyamide acid fiber felt by electrospinning;
(3) cutting the polyamide acid fiber felt into strips;
(4) forming a polyimide fiber by hot stretching;
(5) cutting the polyimide fiber to form an ultra-short polyimide nanofiber;
wherein the polyamide acid fiber felt is cut into strips with a width of 3 - 8 cm; and the ultrashort polyimide nanofiber formed by cutting is 0.1 - 2.00 mm long, wherein the process of forming the polyimide fiber by hot stretching is divided into three stretching stages: in the first stage the stretching temperature is 160 - 220°C; in the second stage the stretching temperature is 280 - 320°C; and in the third stage the stretching temperature is 380 - 420°C;
and in the first stage the draft ratio is 3 - 5, in the second stage the draft ratio is 3 - 5, and in the third stage the draft ratio is 1- 2.

2. The method for preparing an ultrashort electrospun polyimide nanofiber according to claim 1, **characterized in that** the ultrashort polyimide nanofiber formed by cutting has a tensile strength of 1.0 - 8.0 GPa, measured according to the method in the application, and an elongation at break of 10 - 30%, measured according to the method in the application.

3. The method for preparing an ultrashort electrospun polyimide nanofiber according to claim 1, **characterized in that** a raw material for preparing the polyamide acid solution comprises a tetracarboxylic dianhydride monomer, a diamine monomer and a polar solvent.

4. The method for preparing an ultrashort electrospun polyimide nanofiber according to claim 3, **characterized in that** the tetracarboxylic dianhydride monomer is 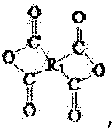 where R₁ is one or more selected from the group consisting of:

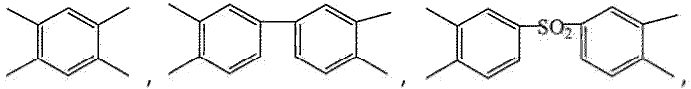

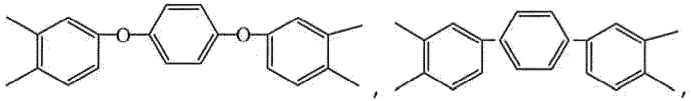

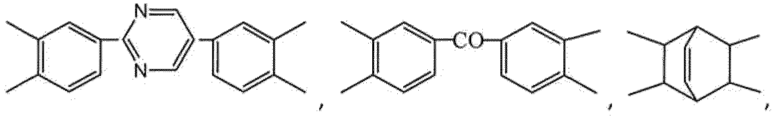

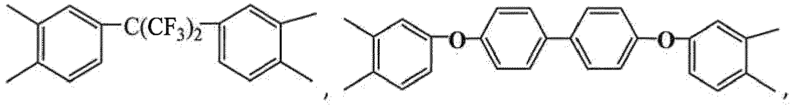

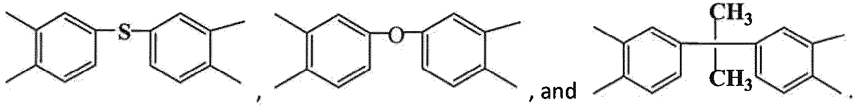

5. The method for preparing an ultrashort electrospun polyimide nanofiber according to claim 3, **characterized in that** the diamine monomer is H₂N-R₂-NH₂, where R₂ is one or more selected from the group consisting of: 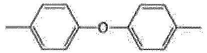 diphenyl ether diamine group, 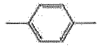 p-phenylenediamine group, 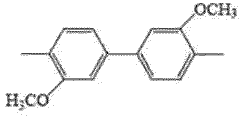 dimethoxybiphenyldiamine group, 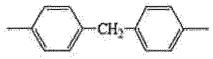 diphenylmethanediamine group, 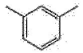 m-phenylenediamine group, 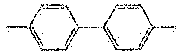 diphenyldiamine group, 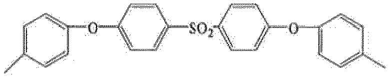 diphenoxydiphenylsulfone diamine group, 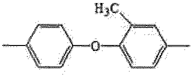 2-methyldiphenyl ether diamine group, 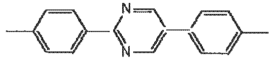 2,6-pyrimidine diphenyl diamine group, and 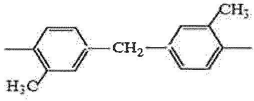 (3,3'-dimethyl)diphenylmethane diamine group.

6. An ultrashort electrospun polyimide nanofiber prepared according to the method for preparing an ultrashort electrospun polyimide nanofiber according to any one of claims 1 to 5.

7. A use of the ultrashort electrospun polyimide nanofiber according to claim 6 in preparing a carbon fiber composite material or a flexible honeycomb material.

## Patentansprüche

1. Verfahren zur Herstellung einer ultrakurzen elektrogesponnenen Polyimid-Nanofaser, **dadurch gekennzeichnet, dass** das Verfahren umfasst:
(1) Herstellen einer Polyamidsäurelösung;
(2) Bilden eines Polyamidsäurefaserfilzes durch Elektrospinnen;
(3) Schneiden des Polyamidsäurefaserfilzes in Streifen;
(4) Bilden einer Polyimidfaser durch Heißverstrecken;
(5) Schneiden der Polyimidfaser, um eine ultrakurze Polyimid-Nanofaser zu bilden;
wobei der Polyamidsäurefaserfilz in Streifen mit einer Breite von 3 - 8 cm geschnitten wird; wobei die durch Schneiden gebildete ultrakurze Polyimid-Nanofaser 0,1-2,00 mm lang ist, wobei der Prozess zur Bildung der Polyimidfaser durch Heißverstrecken in drei Verstreckungsstufen unterteilt ist: In der ersten Stufe beträgt die Verstreckungstemperatur 160-220 °C; in der zweiten Stufe beträgt die Verstreckungstemperatur 280-320°C; und in der dritten Stufe beträgt die Verstreckungstemperatur 380-420°C;
und wobei in der ersten Stufe das Verstreckungsverhältnis 3 - 5 ist, in der zweiten Stufe das Verstreckungsverhältnis 3 - 5 ist und in der dritten Stufe das Verstreckungsverhältnis 1 -2 ist.

2. Verfahren zur Herstellung einer ultrakurzen elektrogesponnenen Polyimid-Nanofaser nach Anspruch 1, **dadurch gekennzeichnet, dass** die durch Schneiden gebildete ultrakurze Polyimid-Nanofaser eine Zugfestigkeit von 1,0-8,0 GPa, gemessen nach dem Verfahren in der Anmeldung, und eine Bruchdehnung von 10-30%, gemessen nach dem Verfahren in der Anmeldung, aufweist.

3. Verfahren zur Herstellung einer ultrakurzen elektrogesponnenen Polyimid-Nanofaser nach Anspruch 1, **dadurch gekennzeichnet, dass** ein Rohmaterial zur Herstellung der Polyamidsäurelösung ein Tetracarbonsäuredianhydrid-Monomer, ein DiaminMonomer und ein polares Lösungsmittel umfasst.

4. Verfahren zur Herstellung einer ultrakurzen elektrogesponnenen Polyimid-Nanofaser nach Anspruch 3, **dadurch gekennzeichnet, dass** das Tetracarbonsäuredianhydrid-Monomer 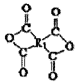 ist, wobei R1 eines oder mehrere ist, ausgewählt aus der Gruppe bestehend aus:

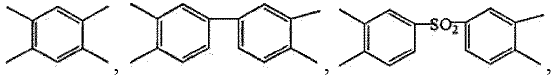

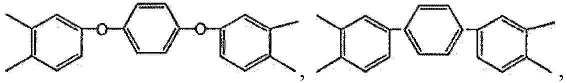

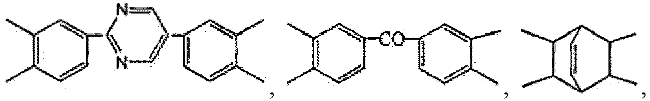

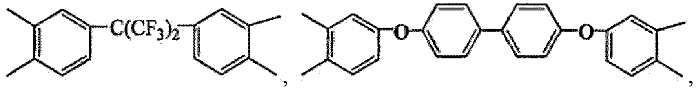

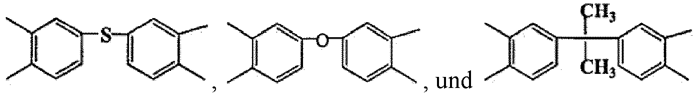

5. Verfahren zur Herstellung einer ultrakurzen elektrogesponnenen Polyimid-Nanofaser nach Anspruch 3, **dadurch gekennzeichnet, dass** das Diaminmonomer H₂N-R₂-NH2 ist, wobei R2 eines oder mehrere ist, ausgewählt aus der Gruppe bestehend aus: 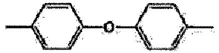 Diphenylether-Diamin-Gruppe, 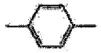 p-Phenylendiamin-Gruppe, 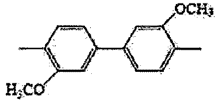 Dimethoxybiphenyldiamin-Gruppe, 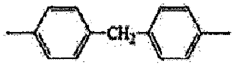 Diphenylmethandiamin-Gruppe, 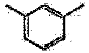 m-Phenylendiamin-Gruppe, 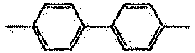 Diphenyldiamin-Gruppe, 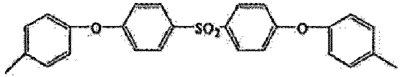 Diphenoxydiphenylsulfondiamin-Gruppe, 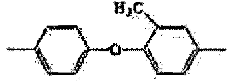 2-Methyldiphenylether-Diamin-Gruppe, 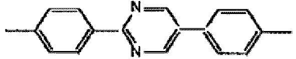 2,6-Pyrimidin-Diphenyldiamin-Gruppe und 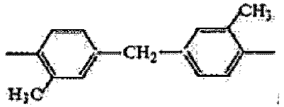 (3,3'-Dimethyl)diphenylmethan-Diamin-Gruppe.

6. Ultrakurze elektrogesponnene Polyimid-Nanofaser, hergestellt nach dem Verfahren zur Herstellung einer ultrakurzen elektrogesponnenen Polyimid-Nanofaser nach einem der Ansprüche 1 bis 5.

7. Verwendung der ultrakurzen elektrogesponnenen Polyimid-Nanofaser nach Anspruch 6 zur Herstellung eines Kohlenstofffaser-Verbundmaterials oder eines flexiblen Wabenmaterials.

## Revendications

1. Méthode de préparation d'une nanofibre de polyimide électrofilée ultra-courte, **caractérisée par le fait que** la méthode comprend :
(1) la préparation d'une solution d'acide polyamide ;
(2) la formation d'un feutre de fibres d'acide polyamide par électrofilage ;
(3) découper le feutre de fibres d'acide polyamide en bandes ;
(4) la formation d'une fibre de polyimide par étirement à chaud ;
(5) couper la fibre de polyimide pour former une nanofibre de polyimide ultra-courte ;
dans lequel le feutre de fibres d'acide polyamide est découpé en bandes d'une largeur de 3 à 8 cm ; et la nanofibre de polyimide ultra-courte formée par découpage a une longueur de 0,1 à 2,00 mm, dans lequel le processus de formation de la fibre de polyimide par étirement à chaud est divisé en trois étapes d'étirement : dans la première étape, la température d'étirement est de 160 à 220°°C ; dans la deuxième étape, la température d'étirement est de 280 à 320°C ; et dans la troisième étape, la température d'étirement est de 380 à 420°C ;
et dans la première étape, le rapport de tirage est de 3 - 5, dans la deuxième étape, le rapport de tirage est de 3 - 5, et dans la troisième étape, le rapport de tirage est de 1 -2.

2. Méthode de préparation d'une nanofibre de polyimide électrofilée ultra-courte selon la revendication 1, **caractérisée par le fait que** la nanofibre de polyimide ultra-courte formée par découpage a une résistance à la traction de 1,0-8,0 GPa, mesurée selon la méthode de l'application, et un allongement à la rupture de 10-30%, mesuré selon la méthode de l'application.

3. Méthode de préparation d'une nanofibre de polyimide électrofilée ultra-courte selon la revendication 1, **caractérisée en ce qu'**une matière première pour la préparation de la solution d'acide polyamide comprend un monomère dianhydride tétracarboxylique, un monomère diamine et un solvant polaire.

4. Méthode de préparation d'une nanofibre de polyimide électrofilée ultra-courte selon la revendication 3, **caractérisée en ce que** le monomère dianhydride tétracarboxylique est 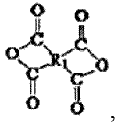 où R₁ est un ou plusieurs choisi(s) dans le groupe constitué par:

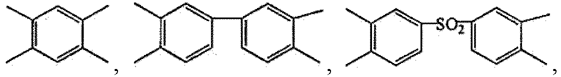

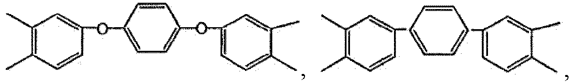

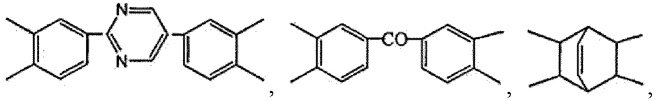

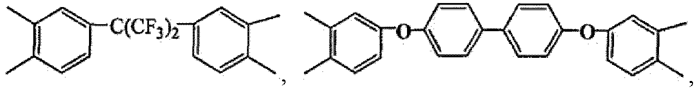

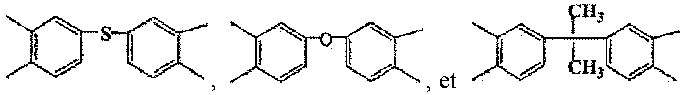

5. Méthode de préparation d'une nanofibre de polyimide électrofilée ultra-courte selon la revendication 3, **caractérisée en ce que** le monomère diamine est H₂N-R₂-NH₂, où R₂ est un ou plusieurs choisi(s) dans le groupe constitué par: 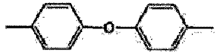 groupe diphényl éther diamine, 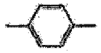 groupe p-phénylènediamine, 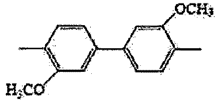 groupe diméthoxybiphényldiamine, 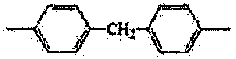 groupe diphénylméthanediamine, 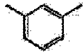 groupe m-phénylènediamine, 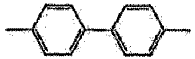 groupe diphényldiamine, 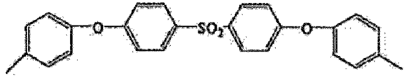 groupe diphénoxydiphénylsulfonediamine, 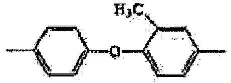 groupe 2-méthyldiphényl éther diamine, 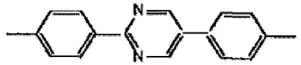 groupe 2,6-pyrimidine diphényl diamine, et 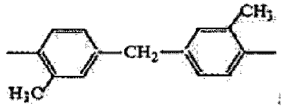 groupe (3,3'diméthyl)diphénylméthane diamine.

6. Nanofibre de polyimide électrofilée ultra-courte préparée selon la méthode de préparation d'une nanofibre de polyimide électrofilée ultra-courte selon l'une quelconque des revendications 1 à 5.

7. Utilisation de la nanofibre de polyimide électrofilée ultra-courte selon la revendication 6 pour la préparation d'un matériau composite à base de fibres de carbone ou d'un matériau souple en nid d'abeille.
